(19) Europäisches Patentamt
European Patent Office
Office européen des brevets

(11) **EP 3 338 360 B1**

(12) **EUROPEAN PATENT SPECIFICATION**

(45) Date of publication and mention
of the grant of the patent:
**29.12.2021 Bulletin 2021/52**

(21) Application number: **16756751.0**

(22) Date of filing: **17.08.2016**

(51) Int Cl.:
***H02P 6/16*** *(2016.01)*

(86) International application number:
**PCT/GB2016/052549**

(87) International publication number:
**WO 2017/029502 (23.02.2017 Gazette 2017/08)**

(54) **CONTROL OF PERMANENT MAGNET MOTORS AND GENERATORS**

STEUERUNG VON PERMANENTMAGNETMOTOREN UND GENERATOREN

COMMANDE DE MOTEURS ET GÉNÉRATEURS À AIMANT PERMANENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.08.2015 GB 201514588**

(43) Date of publication of application:
**27.06.2018 Bulletin 2018/26**

(73) Proprietor: **Aeristech Control Technologies Limited**
**Kenilworth, Warwickshire CV8 2FD (GB)**

(72) Inventors:
• **RICHARDS, Bryn Geoffrey Roddick**
**Kenilworth**
**Warwickshire CV8 2FD (GB)**
• **KALBARCZYK, Michal**
**Kenilworth**
**Warwickshire CV8 2FD (GB)**

(74) Representative: **Barker Brettell LLP**
**100 Hagley Road**
**Edgbaston**
**Birmingham B16 8QQ (GB)**

(56) References cited:
WO-A2-2007/017802     WO-A2-2011/109435
WO-A2-2011/161408     WO-A2-2011/161408
US-A1- 2001 043 806     US-A1- 2011 084 639

## Description

The Field of the Invention

This invention relates to a permanent magnet motor having a control system and a commutation circuit, and a permanent magnet generator having a control system and a commutation circuit.

Background

A permanent magnet motor comprises a permanent magnet rotor and a stator with windings. The permanent magnet rotor includes a number of magnetic pole pairs. Electrical energy is converted into mechanical energy due to magnetic forces between the permanent magnets and the magnetic field induced due to the current in the stator windings.

As the permanent magnets rotate, their position varies with respect to the stationary windings. This means that current needs to flow through different windings at different points in the rotation cycle. Electronic commutation provides a means to ensure that current is passed to the correct stator windings at the correct time, such that the maximum torque is generated on the rotor. This requires a means of sensing rotor position, which may be a dedicated rotor position sensor or a measurement of motor EMF. Based on the position measurement, electronic signals are generated to enable switching of the DC current to the correct windings.

Each commutation event corresponds to the period for which current flows to the same windings. For example, for a 4-pole 3-phase motor, a single commutation event lasts through 30 degrees of shaft rotation. At the end of the commutation event, the permanent magnets are adjacent to different windings and switching of the current is required.

In addition to commutation, electronic control is required to set the rotor speed by varying the torque acting on the rotor. In order to do this, controllers regulate the current in the motor windings. Pulse width modulation is a well-known method for regulation of current in motor windings.

In pulse width modulation, during a commutation event, high frequency electronic switching applies constant amplitude voltage pulses across the stator windings. Each of these voltage pulses results in a pulse of current in the stator winding. The duty cycle for a commutation event is the ratio of conduction time to nonconduction time during that event. Setting the duty cycle of the voltage pulses allows the average current in the windings to be controlled for each commutation event.

The fundamental electrical frequency of the motor is the motor's rotational speed multiplied by the number of magnetic pole pairs on the rotor. Electric motors usually operate at rotational speeds of less than 200 Hz (200 revolutions per second). However, in some applications, much higher motor speeds are required. An example of this is in turbomachines, where rotational speeds in excess of 1,500 Hz, and in some automotive applications more than 2,500 Hz, are required.

During pulse width modulation, the switching frequency of the pulses must be much higher than (at least 10 and typically 100 times) the fundamental electrical frequency of the motor. As a result of this, in the high speed applications described above, the electronic switching frequency needed to achieve pulse width modulation is very high. This means that the cost and complexity of the electronic components is high.

US2001043806 discloses a system and method for controlling a brushless DC motor. The motor includes a rotor and a stator having at least three phases. The rotor is magnetically coupled to and moveable by the stator when the coils are appropriately energized. Each of the coils is characterized by a corresponding voltage waveform. No more than two position sensors are provided for sensing the position of the rotor during a start-up mode. Each position sensor has an associated position sensor signal. The position sensors are aligned to sense the rotor position such that each position sensor signal indicates a zero torque point corresponding to a phase voltage waveform. The position of the rotor is sensed such that the position sensor signals indicate the start-up operating state of the motor. During a first ambiguous start-up state, two predetermined coils are alternately energized. During a defined start-up operating state, one predetermined coil is energized

WO2011161408 discloses an electrical controller for electric motors. A control system for an electric motor comprises means for supplying excitation current to different windings of the motor at any given time. Furthermore, the amplitude of the excitation current is independently variable of the timing and duration of the application of the excitation current to the windings. This allows increased control of the motor and facilitates the operation of the motor at high mechanical and/or electrical speeds.

The present invention has been devised with the foregoing in mind.

Statements of Invention

In a first aspect of the present invention there is provided a controller according to claim 1. Optional or preferred features for the controller are defined in dependent claims 2 to 8.

In one aspect of the invention, there is provided a permanent magnet motor according to claim 9. In an embodiment the permanent motor may comprise a plurality of phase windings, a control system and a commutation circuit. The commutation circuit is operative for controlling a timing of a current supplied to the phase windings in dependence upon an angular position of the permanent magnet motor. The control system is operative to supply a current to an individual of the phase windings in a current pulse event occurring within a commutation event. The duration of the current pulse event is less than the duration of the commutation event and the proportion of the commutation event for which the current is supplied to the individual of the phase windings is determined so as to control the speed of the motor.

It is an advantage of the present invention that the permanent magnet motor may be controlled without the need for very high frequency switching of components.

In an embodiment, the current pulse event comprises a single current pulse.

In an embodiment, the current pulse event comprises a plurality of current pulses.

Preferably, the plurality of pulses in the current pulse event are supplied at a frequency which is less than four times a fundamental electrical frequency of the permanent magnet motor.

In an embodiment, the commutation circuit comprises a commutation feedback loop which provides a current pulse event to a given phase winding when the amplitude of the sensed back EMF for the corresponding phase winding is greater than the back EMF sensed in respect of the other ones of the plurality of phase windings.

In an embodiment, the commutation feedback loop comprises a filter for filtering the sensed back EMF and the filter introduces a phase shift to the sensed back EMF to synchronise the current pulse event and the angular position signal.

In an embodiment, the commutation circuit comprises a sensor to measure a position of the permanent magnet motor.

In an embodiment, the commutation circuit is operationally independent of the control system.

In a further aspect of the invention, there is provided a permanent magnet generator according to claim 9. In an embodiment the permanent magnet generator comprises a plurality of phase windings, a control system and a commutation circuit. The commutation circuit may be operative for controlling a timing of a current drawn from the phase windings in dependence upon an angular position of the permanent magnet motor. The control system may be operative to draw a current to an individual of the phase windings in a current pulse event occurring within a commutation event. The duration of the current pulse event may be less than the duration of the commutation event and the proportion of the commutation event for which the current is drawn from the individual of the phase windings may be determined so as to control the speed of the permanent magnet generator.

It is an advantage of the present invention that the permanent magnet generator may be controlled without the need for very high frequency switching of components.

In an embodiment, the current pulse event comprises a single current pulse.

In an embodiment, the current pulse event comprises a plurality of current pulses.

Preferably, the plurality of current pulses in the current pulse event are drawn at a frequency which is less than four times a fundamental electrical frequency of the permanent magnet generator.

In an embodiment, the commutation circuit comprises a commutation feedback loop which draws a current pulse from a given phase winding when the amplitude of the sensed back EMF for the corresponding phase winding is greater than the back EMF sensed in respect of the other ones of the plurality of phase windings.

In an embodiment, the commutation feedback loop comprises a filter for filtering the sensed back EMF and the filter introduces a phase shift to the sensed back EMF to synchronise the current pulse event and the angular position signal.

In an embodiment, the commutation circuit comprises a sensor to measure a position of the permanent magnet generator.

In an embodiment, the commutation circuit is operationally independent of the control system.

In another aspect, there is provided a forced induction system for an internal combustion engine with a crankshaft according to claim 10. In an embodiment, the system may comprise: a compressor for increasing the pressure of gas into the engine; a turbine arranged to be driven by engine exhaust gas; a generator arranged to be driven by the turbine; and an permanent magnet motor, arranged to drive the compressor, wherein the generator and motor are electrically connected and whereby the compressor is driven at least in part by an output torque of the turbine via the electrical connection.

In embodiments, the turbine may be mechanically decoupled from the compressor.

Brief Description of Drawings

The invention will now be further described by way of example with reference to the accompanying drawings, in which:

Figure 1 is a schematic diagram showing a motor control loop, according to a first embodiment of the present invention.
Figure 2 is a circuit diagram showing an IGBT module, according to the first embodiment of the present invention.
Figure 3a is a plot of motor phase voltage against time.
Figure 3b is a plot of motor phase-to-phase voltage against time.
Figure 3c is a plot of filtered motor phase-to-phase voltage.
Figure 4 is a circuit diagram a filter, according to the first embodiment of the present invention.
Figure 5 is a circuit diagram showing a comparator circuit, according to a first embodiment of the present invention.

Figure 6a is a plot of comparator output signals, according to the first embodiment of the present invention.

Figure 6b is a plot of required commutation signals, according to the first embodiment of the present invention.

Figure 7 is an illustration of duty cycle, according to the first embodiment of the present invention.

Figure 8 is a circuit diagram showing an IGBT module, according to a second embodiment of the present invention.

Specific Description

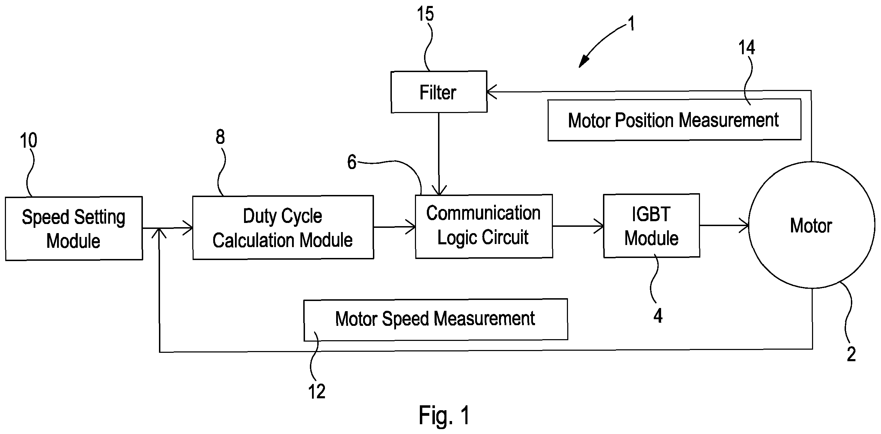

Referring to Figure 1, there is shown a schematic diagram of a brushless DC motor controller 1, which comprises a brushless DC motor 2, an Integrated Gate Bipolar Transistor (IGBT) Module 4, a commutation logic circuit 6, a duty cycle calculation module 8, a speed setting module 10, and feedback loops for motor speed measurement 12 and motor position measurement 14. The feedback loop for motor position measurement 14 includes a filter 15.

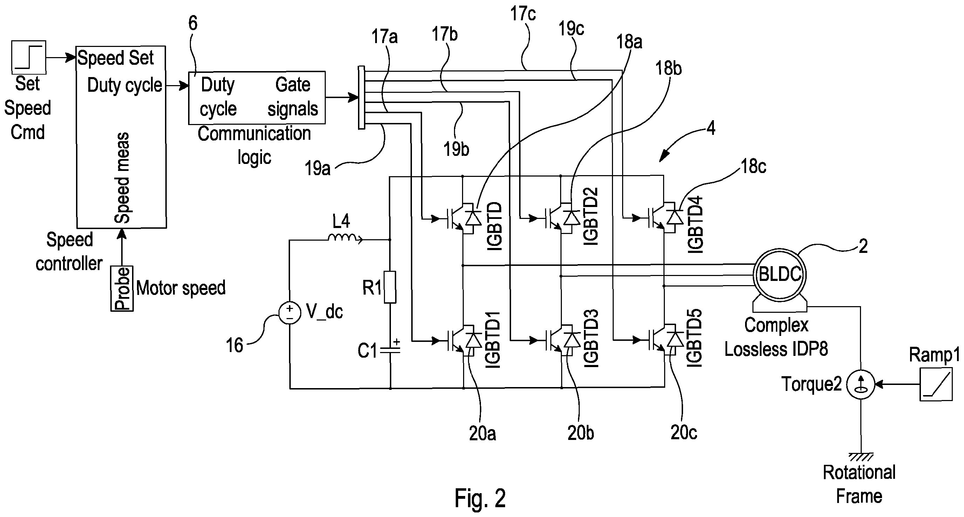

The desired motor speed 10 and the rotor speed measurement 12 are compared, with the result used to perform a duty cycle calculation 8 to determine the required motor current. The commutation logic circuit 6 determines which stator windings require current based on a filtered motor position measurement 14, which in this case is from a measurement of motor EMF. The calculated duty cycle and commutation signal feed into a motor controller 4 which ensures that the correct current flows through the correct windings of the motor 2. The function of each of the elements of motor control loop 1 is explained below with references to Figures 2 to 7.

Referring to Figure 2, there is shown a circuit diagram for an IGBT module 4 for a 3- phase brushless DC motor controller 1, which comprises a DC voltage source 16, three top switching elements 18a, 18b, 18c, three bottom switching elements 20a, 20b, 20c, a brushless DC motor 2, and a representation of a commutation logic circuit 6. The commutation logic circuit 6 passes switching signals through top switching lines 17a, 17b, 17c to the top switching elements 18a, 18b, 18c, and through bottom switching lines 19a, 19b, 19c to the bottom switching elements 20a, 20b, 20c. The combination of switching components activated determines across which phases of the motor 2 the voltage from the DC source 16 is applied.

One top switching component and one bottom switching component are associated with each of the three motor phases. When current is supplied to the motor, a single top switching component and a single bottom switching component receive a high signal and are activated. The commutation logic 6 determines, based on the motor position measurement, which switches need to be activated. This is explained in more detail below.

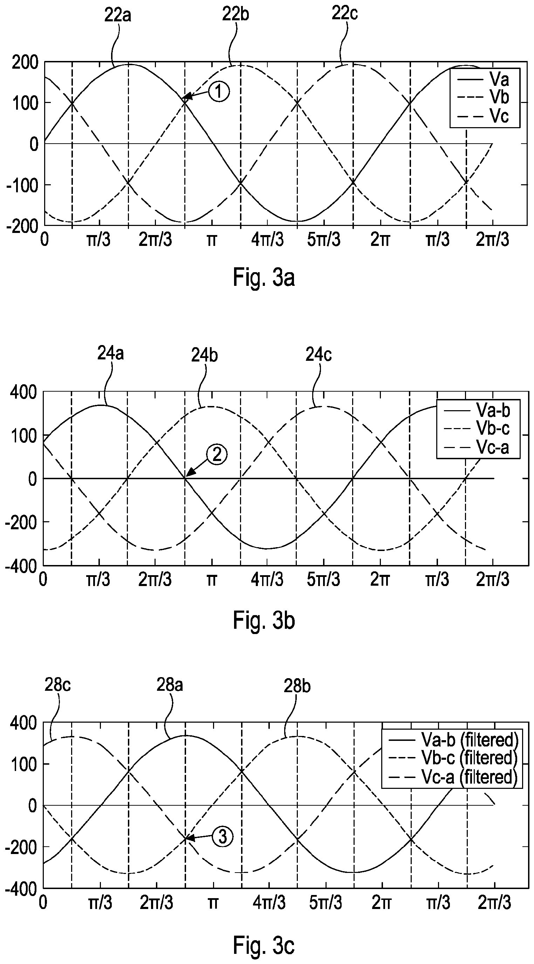

In order to measure the position of the motor, motor back-EMF is measured. Three back-EMF phase voltages 22a, 22b, 22c, each generated by one of the three phases of the motor 2 are shown in figure 3a, where they are idealised as sine waves. In reality, the back-EMF signals are choppy and distorted, making determination of the angular position of the motor and determination of the commutation timing difficult. Furthermore, in practical motor control, the commutation itself disturbs the back-EMF because of the rapid phase current changes in the motor windings. This disturbance can deform the shapes of the back-EMF wave forms, which can make comparison between them unreliable. Additionally, due to the practicalities of wiring the controller, measuring the back-EMF across a single phase is difficult.

In the first embodiment, the reliability of the back-EMF signal is improved by measuring the phase-to-phase voltages 24a, 24b, 24c of the back EMF (allowing the controller to monitor the same wires that are used to impart current to the motor), as is shown in figure 3b. However, the phase-to-phase voltages 24a, 24b, 24c are not aligned with the phase voltages 22a, 22b, 22c. For example, the Phase A and Phase B crossing point (marked as Point 1) in Figure 3a would be the Phase A-B zero crossing point (marked as Point 2) in Figure 3b. As the phase to phase crossing point determines the optimal position for switching the current supplied to the motor to the next corresponding phase, determination of this position is critical to ensure efficient use of the motor. The phase-to-phase voltage is the difference between two phase voltages, and so the difference in phase between these two signals can be calculated as follows:

Phase A voltage: $\sin(x)$
Phase B voltage: $\sin(x-\pi/3)$ (120 degree phase offset in 3-phase motor)
Phase A-to-B: $\sin(x) - \sin(x-\pi/3) = \sqrt{3}\sin(x+\pi/6)$ (a waveform 30 degrees ahead of $\sin(x)$)

The phase to phase crossing point (point 1 in fig 3a) is no longer in an easily determined position (point 2 in fig 3b). In order to get a reliable signal, the three phase back EMF is therefore filtered before the comparisons are carried out.

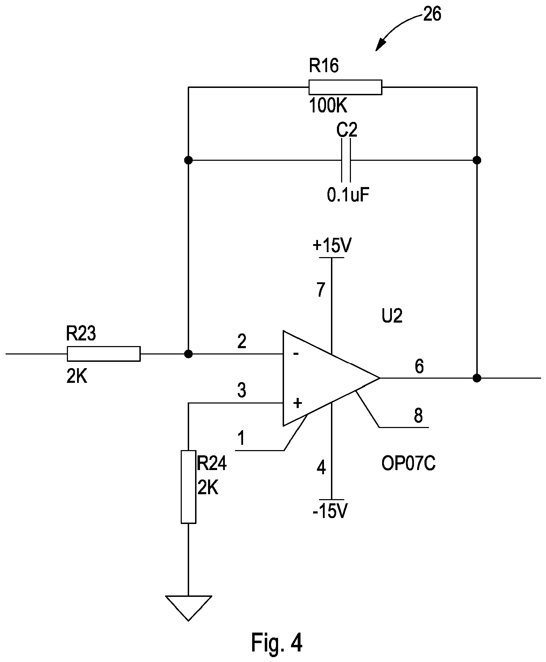

An example of a low pass filter 26 design which may be used to filter the phase-to- phase voltages is shown in Figure 4. The transfer function for the filter 26 is $\frac{50}{0.01S+1}$. With increasing motor speed and electrical frequency, the behaviour of the filter 26 approaches a pure integral, and the time lag produced by this filter approaches 90 degrees lag. A representation of the filtered phase to phase signals 28a, 28b, 28c is shown in figure 3c.

Table 1 shows the degree of phase shift imparted by the filter at the different speeds of the motor. It can be seen that for a large range of the motor speed, the phase shifts are very close to 90 degree.

Table 1. Phase shift VS RPM

| Motor speed | Phase shift |
|---|---|
| 1000 RPM | 64.5 degree |
| 5000 RPM | 84.5 degree |
| 10000 RPM | 87.27 degree |
| 40000 RPM | 89.31 degree |
| 120000 RPM | 89.77 degree |

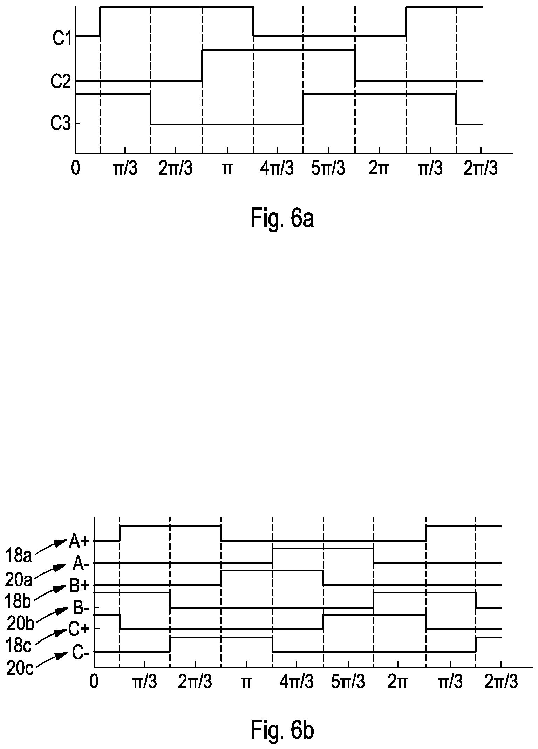

As stated above, the ideal switching timing is obtained by considering the crossing points between phase voltage signals. However, the controller uses filtered phase-to- phase voltage signals, which are in total 60 degrees behind the phase voltages (30 degrees - 90 degrees). Because a commutation event occurs every 60 degrees (see Figure 6b), these filtered phase-to-phase voltages can be used, although the mapping of which crossover points are associated with which phase current signals is different to the mapping that would apply if the phase voltages were used.

Figure 3c shows the filtered phase to phase signals with 90 degree phase shift considered. Aligned with Point 1 and 2 in Figure 3a and 3b, the corresponding point in Figure 3c is marked as Point 3. This is the crossing point between Phase B-C and Phase C-A. Figure 3c shows that, despite the constant phase shift, the commutation timing for current switching can still be determined by comparing the magnitudes of the filtered, phase-to-phase voltages.

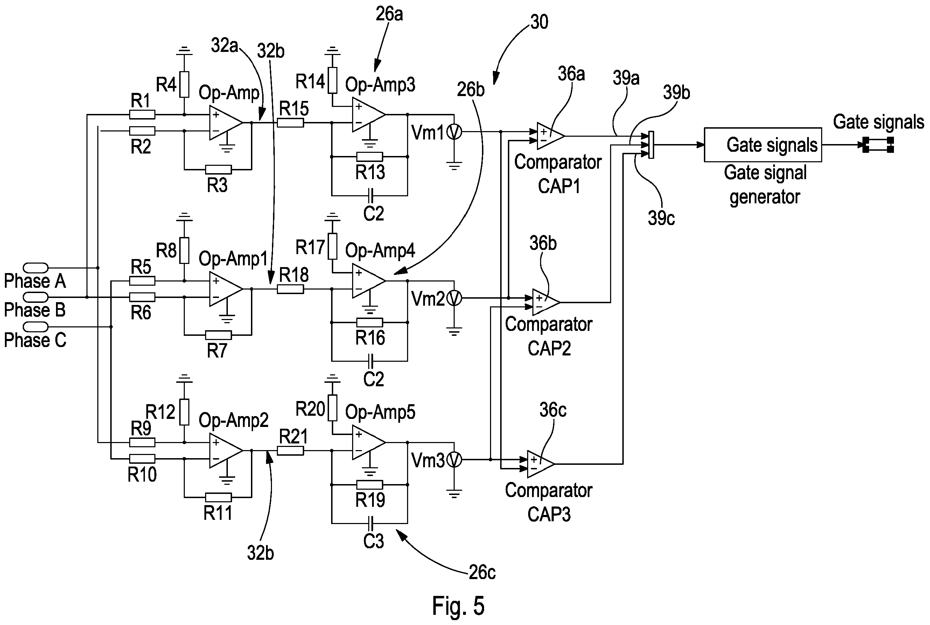

Referring to figure 5, there is shown a schematic diagram of a comparator circuit 30. Comparator circuit 30 includes voltage lines 32a, 32b, 32c, which carry phase-to-phase voltages 24a, 24b, 24c. The comparator circuit further includes filters 26a, 26b, 26c, each of which operates in the same manner as the filter 26 of figure 4. The outputs from these filters 26a, 26b, 26c connect to comparators 36a, 36b, 36c.

The phase-to-phase voltage signals are passed to filters 26a, 26b, 26c, which convert the signals to comparator voltages Vm1, Vm2, Vm3. The comparator voltages correspond to the filtered phase-to-phase voltages 28a, 28b, 28c of figure 3c. The three comparators 36a, 36b, 36c give high or low voltage signals (see C1, C2 and C3 in figure 6a) depending on their comparisons of comparator voltages Vm1, Vm2, Vm3. For example, comparator CAP1 will return a high signal when Vm1 is greater than Vm2.

Referring to figure 6a, there is shown a plot of output voltage signals C1, C2, C3 from the comparators 36a, 36b, 36c. This plot corresponds to the measured phase voltages shown in figures 3a to 3c. C1 represents the comparison between Va-b (filtered) 28a and Vb-c (filtered) 28b, C2 represents the comparison between Vb-c (filtered) 28b and Vc-a (filtered) 28c, and C3 represents the comparison between Vc-a (filtered) 28c and Va-b (filtered) 28a.

Referring to figure 6b, there are shown plots of the required commutation signals, which are to be passed to the IGBTs 18a, 18b, 18c, 20a, 20b, 20c, based on the measured phase voltages of figures 3a to 3c. The commutation signals may be achieved from signals C1, C2, C3 using well-known electronic components.

It will be appreciated that in other embodiments of the present invention, the motor position may be determined from a measurement of back-EMF across a single phase, or from a sensor directly measuring rotor position.

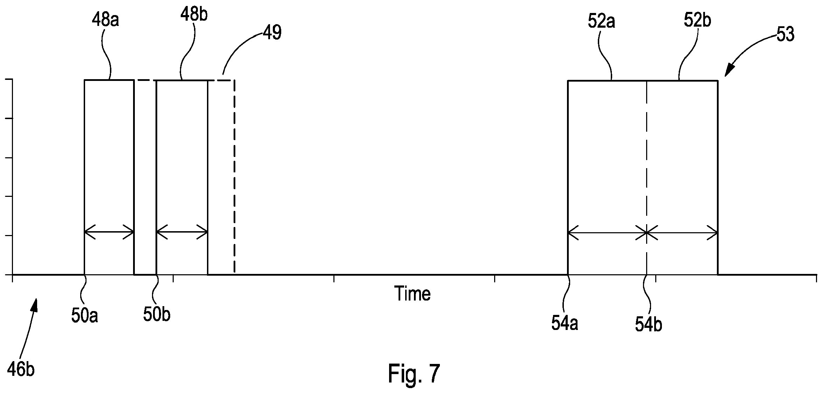

Referring to figure 7, there is shown a plot 46 of a switching signal against time, which illustrates duty cycle. In order to control the speed of the motor, the duty cycle of the switching signals is set for a given commutation event. The duty cycle is the ratio of conduction time to non-conduction time.

The first group of signals 49 of figure 7 represents two commutation events 48a, 48b which begin at times 50a and 50b. The duty cycle for each of these commutation events is 65%. The second group of signals 53 represents two commutation events 52a, 52b which begin at times 54a, 54b. The duty cycle for each of these commutation events is 100%.

In the first embodiment of the present invention, for both groups of signals 49 and 53, a single switching pulse is applied at the beginning of each commutation event. This means that the switching frequency of a switching component need not be any higher than the fundamental electrical frequency of the motor. It should be noted that the switching pulse may begin at any point during the commutation event, provided that enough time remains in the commutation event for the pulse to be completed.

In some embodiments, two or more pulses may be supplied during a commutation event. In other embodiments, during a commutation event, at least one current pulse is supplied at a frequency which is less than four times the fundamental electrical frequency of the permanent magnet motor.

In other embodiments, current is supplied to the phase windings during only some of the commutation events. Referring again to Figure 2, it may be seen that setting the duty cycle of the switching signals varies the proportion of the commutation event for which voltage is applied across a stator winding by the voltage source 16. This determines the average current in the stator windings and allows the motor speed to be controlled. The required duty cycle is calculated based on the difference between the motor speed and the target speed. The calculation may be carried out by a microcomputer employing proportional integral control.

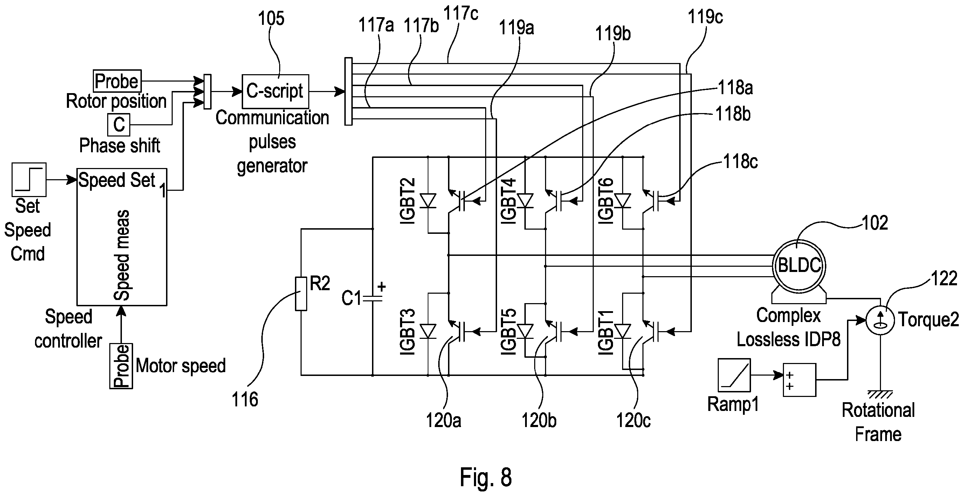

Referring to figure 8, there is shown a second embodiment of the present invention, in which the controller 102 is used to control a 3-phase generator 102, which is subjected to an external mechanical torque 122.

In this embodiment, an IGBT module 104 is used to commutate the generator 102. The IGBT module 104 again includes three top switching elements 118a, 118b, 118c, and three bottom switching elements 120a, 120b, 120c. A commutation logic circuit 106 passes switching signals through top switching lines 117a, 117b, 117c to the top switching elements 118a, 118b, 118c, and through bottom switching lines 119a, 119b, 119c to the bottom switching elements 120a, 120b, 120c. The combination of switching components activated determines from which phases of the generator 102 current is drawn.

The commutation pattern is calculated in the same manner as described above based on measured phase-to-phase voltages. This enables current to be drawn from the correct generator phase winding at the correct time, such that maximum power is taken from the generator. Power taken from the generator 102 is dissipated in the load R2 116, which could be a grid or some other device.

Again, the IGBTs 118a, 118b, 118c, 120a, 120b, 120c are switched on for only a portion of each commutation event, dependent on a calculated duty cycle. In this embodiment, the duty cycle is calculated based on a measurement of the external mechanical torque 122 applied to the generator.

In other embodiments, the external mechanical torque 122 is calculated based on a motor constant and the total average current being drawn from the motor. This is a cheaper alternative to direct measurement of external torque. The accuracy of this calculation may be improved by tabulating motor constant against ambient temperature and recent load state, a priori. During operation, a temperature sensor, and a memory of recent load states are used to look up a more accurate instantaneous value of the motor constant.

**Claims**

1. A controller (1) for a permanent magnet motor/generator having a plurality of phase windings, wherein the controller comprises:

   a motor speed measurement module (12) for determining a current speed;
   a speed setting module (10) for setting a desired motor speed of the permanent magnet motor;
   a control system (16); and
   a commutation circuit (6) operative for controlling a commutation event, said commutation event being a timing of a current supplied to the phase windings in dependence upon an angular position of the permanent magnet electric rotating machine (2; 102),
   wherein the control system (16) is operative to supply one or more current pulses to a given phase winding in a current pulse event, said current pulse event occurring within the commutation event,
   **characterised in that**
   the commutation circuit (6) comprises a commutation feedback loop for supplying the one or more current pulses to the given phase winding when the amplitude of the sensed back EMF for the corresponding phase winding is greater than the back EMF sensed in respect of the other ones of the plurality of phase windings;
   wherein the duration of the current pulse event is less than the duration of the commutation event and the proportion of the commutation event for which the current is supplied to the individual of the phase windings is determined from a comparison of a desired speed and a current speed of the permanent magnet motor/generator (2; 102).

2. A controller according to claim 1, wherein the current pulse event comprises a single current pulse.

3. A controller according to claim 1, wherein the current pulse event comprises a plurality of current pulses.

4. A controller according to claim 3, wherein the plurality of current pulses in the current pulse event are supplied at a frequency which is less than four times a fundamental electrical frequency of the permanent magnet motor/generator (2; 102).

5. A controller according to claim 4, wherein the commutation feedback loop comprises a filter (15) for filtering the sensed back EMF, the filter introducing a phase shift to the sensed back EMF to synchronise the current pulse event and the angular position signal.

6. A controller according to any of claims 1 to 4, wherein the commutation circuit (6) comprises one or more sensors to measure a position and/or a speed of the permanent magnet motor/generator.

7. A controller according to any preceding claim, wherein the permanent magnet motor/generator is a generator (102) subjected to an external mechanical torque (122), and wherein the controller comprises an IGBT module (104) to commutate the generator (102) dependent on a duty cycle calculated based on a measurement of the external mechanical torque (122).

8. A controller according to any preceding claim, wherein the commutation circuit (6) is operationally independent of the control system (16).

9. A permanent magnet motor/generator comprising: a plurality of phase windings; and a controller (1) according to any preceding claim.

**10.** A forced induction system for an internal combustion engine with a crankshaft, the system comprising:

a compressor for increasing the pressure of gas into the engine;
a turbine arranged to be driven by engine exhaust gas;
a generator arranged to be driven by the turbine; and
an permanent magnet motor according to claim 9, arranged to drive the compressor, wherein the generator and motor are electrically connected and whereby the compressor is driven at least in part by an output torque of the turbine via the electrical connection.

**11.** The forced induction system of claim 10, wherein the turbine is mechanically decoupled from the compressor.

**Patentansprüche**

**1.** Steuerung (1) für einen Permanentmagnetmotor/-generator mit einer Vielzahl von Phasenwicklungen, wobei die Steuerung umfasst:

ein Motordrehzahlmessmodul (12) zum Bestimmen einer aktuellen Drehzahl;
ein Drehzahleinstellmodul (10) zum Einstellen einer gewünschten Motordrehzahl des Permanentmagnetmotors;
ein Steuerungssystem (16); und
eine Kommutierungsschaltung (6), die zum Steuern eines Kommutierungsereignisses in der Lage ist, wobei das Kommutierungsereignis eine zeitliche Steuerung eines den Phasenwicklungen zugeführten Stroms in Abhängigkeit von einer Winkelposition der elektrischen Permanentmagnetdrehmaschine (2; 102) ist, wobei das Steuerungssystem (16) in der Lage ist, einer gegebenen Phasenwicklung in einem Stromimpulsereignis einen oder mehrere Stromimpulse zuzuführen, wobei das Stromimpulsereignis innerhalb des Kommutierungsereignisses auftritt, **dadurch gekennzeichnet, dass** die Kommutierungsschaltung (6) eine Kommutierungsrückkopplungsschleife zum Zuführen des einen oder der mehreren Stromimpulse an die gegebene Phasenwicklung umfasst, wenn die Amplitude der erfassten Gegen-EMK für die entsprechende Phasenwicklung größer ist als die Gegen-EMK, die in Bezug auf die anderen der Vielzahl von Phasenwicklungen erfasst wird; wobei die Dauer des Stromimpulsereignisses kürzer ist als die Dauer des Kommutierungsereignisses und der Anteil des Kommutierungsereignisses, für den der Strom der einzelnen der Phasenwicklungen zugeführt wird, aus einem Vergleich einer gewünschten Drehzahl und einer aktuellen Drehzahl des Permanentmagnetmotors/-generators (2; 102) bestimmt wird.

**2.** Steuerung nach Anspruch 1, wobei das Stromimpulsereignis einen einzelnen Stromimpuls umfasst.

**3.** Steuerung nach Anspruch 1, wobei das Stromimpulsereignis eine Vielzahl von Stromimpulsen umfasst.

**4.** Steuerung nach Anspruch 3, wobei die Vielzahl von Stromimpulsen im Stromimpulsereignis mit einer Frequenz zugeführt werden, die weniger als das Vierfache einer elektrischen Grundfrequenz des Permanentmagnetmotors/- generators (2; 102) beträgt.

**5.** Steuerung nach Anspruch 4, wobei die Kommutierungsrückkopplungsschleife ein Filter (15) zum Filtern der erfassten Gegen-EMK umfasst, wobei das Filter eine Phasenverschiebung in die erfasste Gegen-EMK einführt, um das Stromimpulsereignis und das Winkelpositionssignal zu synchronisieren.

**6.** Steuerung nach einem der Ansprüche 1 bis 4, wobei die Kommutierungsschaltung (6) einen oder mehrere Sensoren zum Messen einer Position und/oder einer Drehzahl des Permanentmagnetmotors/-generators umfasst.

**7.** Steuerung nach einem der vorhergehenden Ansprüche, wobei der Permanentmagnetmotor/-generator ein Generator (102) ist, der einem externen mechanischen Drehmoment (122) ausgesetzt ist, und wobei die Steuerung ein IGBT-Modul (104) zum Kommutieren des Generators (102) in Abhängigkeit von einem auf der Grundlage einer Messung des externen mechanischen Drehmoments (122) berechneten Tastverhältnis umfasst.

**8.** Steuerung nach einem der vorhergehenden Ansprüche, wobei die Kommutierungsschaltung (6) betrieblich unabhängig vom Steuerungssystem (16) ist.

**9.** Permanentmagnetmotor/-generator, umfassend: eine Vielzahl von Phasenwicklungen; und eine Steuerung (1) nach einem der vorhergehenden Ansprüche.

**10.** Ladersystem für einen Verbrennungsmotor mit einer Kurbelwelle, wobei das System umfasst:

einen Kompressor zum Erhöhen des Drucks von Gas in den Motor;

eine Turbine, die dazu angeordnet ist, durch Motorabgas angetrieben zu werden;

einen Generator, der dazu angeordnet ist, von der Turbine angetrieben zu werden; und

einen Permanentmagnetmotor nach Anspruch 9, der dazu angeordnet ist, den Kompressor anzutreiben, wobei der Generator und der Motor elektrisch verbunden sind und

wobei der Kompressor zumindest teilweise durch ein Ausgangsdrehmoment der Turbine über die elektrische Verbindung angetrieben wird.

11. Ladersystem nach Anspruch 10, wobei die Turbine mechanisch vom Kompressor entkoppelt ist.

## Revendications

1. Moyen (1) de commande pour un moteur/générateur à aimants permanents doté d'une pluralité d'enroulements de phase, le moyen de commande comportant :

un module (12) de mesure de vitesse de moteur servant à déterminer une vitesse actuelle ;

un module (10) de réglage de vitesse servant à régler une vitesse de moteur souhaitée du moteur à aimants permanents ;

un système (16) de commande ; et

un circuit (6) de commutation pouvant fonctionner pour commander un événement de commutation, ledit événement de commutation étant un minutage d'un courant fourni aux enroulements de phase en fonction d'une position angulaire de la machine électrique tournante (2 ; 102) à aimants permanents,

le système (16) de commande pouvant fonctionner pour fournir une ou plusieurs impulsions de courant à un enroulement de phase donné dans un événement d'impulsion de courant, ledit événement d'impulsion de courant intervenant au cours de l'événement de commutation, **caractérisé en ce que** le circuit (6) de commutation comporte une boucle de réaction de commutation servant à fournir l'impulsion ou les impulsions de courant à l'enroulement de phase donné lorsque l'amplitude de la FCEM détectée pour l'enroulement de phase correspondant est supérieure à la FCEM détectée par rapport aux autres enroulements de la pluralité d'enroulements de phase ;

la durée de l'événement d'impulsion de courant étant inférieure à la durée de l'événement de commutation et la proportion de l'événement de commutation pendant laquelle le courant est fourni à l'enroulement individuel parmi les enroulements de phase étant déterminé à partir d'une comparaison d'une vitesse souhaitée et d'une vitesse actuelle du moteur/générateur (2 ; 102) à aimants permanents.

2. Moyen de commande selon la revendication 1, l'événement d'impulsion de courant comportant une seule impulsion de courant.

3. Moyen de commande selon la revendication 1, l'événement d'impulsion de courant comportant une pluralité d'impulsions de courant.

4. Moyen de commande selon la revendication 3, la pluralité d'impulsions de courant dans l'événement d'impulsion de courant étant fournie à une fréquence qui est inférieure à quatre fois une fréquence électrique fondamentale du moteur/générateur (2 ; 102) à aimants permanents.

5. Moyen de commande selon la revendication 4, la boucle de réaction de commutation comportant un filtre (15) servant à filtrer la FCEM détectée, le filtre introduisant un déphasage sur la FCEM détectée pour synchroniser l'événement d'impulsion de courant et le signal de position angulaire.

6. Moyen de commande selon l'une quelconque des revendications 1 à 4, le circuit (6) de commutation comportant un ou plusieurs capteurs servant à mesurer une position et/ou une vitesse du moteur/générateur à aimants permanents.

7. Moyen de commande selon l'une quelconque des revendications précédentes, le moteur/générateur à aimants permanents étant un générateur (102) soumis à un couple mécanique externe (122), et le moyen de commande comportant un module (104) d'IGBT servant à commuter le générateur (102) selon un cycle de marche calculé d'après une mesure du couple mécanique externe (122) .

8. Moyen de commande selon l'une quelconque des revendications précédentes, le circuit (6) de commutation étant opérationnellement indépendant du système (16) de commande.

9. Moteur/générateur à aimants permanents comportant : une pluralité d'enroulements de phase ; et un moyen (1) de commande selon l'une quelconque des revendications précédentes.

10. Système de suralimentation pour un moteur à combustion interne doté d'un vilebrequin, le système comportant :

un compresseur servant à accroître la pression de gaz entrant dans le moteur ;

une turbine disposée pour être entraînée par un gaz d'échappement du moteur ;

un générateur disposé pour être entraîné par la turbine ; et

un moteur à aimants permanents selon la revendication 9, disposé pour entraîner le compresseur, le générateur et le moteur étant reliés électriquement et le compresseur étant entraîné au moins en partie par un couple de sortie de la turbine par l'intermédiaire de la connexion électrique.

11. Système de suralimentation selon la revendication 10, la turbine étant découplée mécaniquement du compresseur.

Fig. 1

EP 3 338 360 B1

Fig. 2

Fig. 3a

Fig. 3b

Fig. 3c

Fig. 4

Fig. 5

Fig. 6a

Fig. 6b

Fig. 7

Fig. 8

**EP 3 338 360 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2001043806 A
- WO 2011161408 A